Europäisches Patentamt

European Patent Office

Office européen des brevets

(11) Publication number: **0 152 016 B1**

## EUROPEAN PATENT SPECIFICATION

(45) Date of publication of patent specification: **12.06.91**     (51) Int. Cl.⁵: **B28B 23/00, C04B 16/06**

(21) Application number: **85100972.0**

(22) Date of filing: **31.01.85**

(54) Method and apparatus for the continuous production of reinforced manufactured cement products.

(30) Priority: **10.02.84 IT 1955284**

(43) Date of publication of application:
**21.08.85 Bulletin 85/34**

(45) Publication of the grant of the patent:
**12.06.91 Bulletin 91/24**

(84) Designated Contracting States:
**AT BE CH DE FR GB LI LU NL SE**

(56) References cited:
**EP-A- 0 003 245**
**WO-A-81/00375**
**FR-A- 2 356 610**
**GB-A- 2 003 422**

(73) Proprietor: **S.I.D.I.-Société Internationale de Développements Industriels S.A. Holding
15 Boulevard Roosvelt
Luxembourg(LU)**

(72) Inventor: **Magnani, Silvio
Via Colombarone 78
Canneto Pavese (Pavia)(IT)**

(74) Representative: **Gervasi, Gemma, Dr. et al
Studio Brevetti e Marchi NOTARBARTOLO & GERVASI 33, Viale Bianca Maria
I-20122 Milano(IT)**

## Description

This invention relates to a method and apparatus for the continuous production of manufactured cement products reinforced by means of mesh obtained from fibrillated plastics film.

More particularly, the invention relates to a method and relative apparatus for the continuous production of products manufactured from cement mixes and reinforced by means of mesh obtained from plastics film, in which the mesh is incorporated into the mix by spraying said mix on to the mesh, which is made to continuously advance by moving along a horizontal plane rigid with a cloth or felt support, said cement mix being sprayed on to the continuously advancing mesh such that it becomes distributed uniformly over the mesh.

The term "cement mix" or more simply the term "cement" indicates in the present description a mix consisting exclusively or mainly of one or more binders such as cement, lime and pozzolan, white gypsum binder and the like, with water.

The term "plastics film mesh" or more simply "mesh" indicates in the present description any mesh obtained by treating continuous film, and in particular the mesh obtained by fibrillation for example as described in Italian patent application No. 9504A/77.

The method and apparatus according to the present invention produce reinforced manufactured cement products such as flat or corrugated slabs, panels, tubes etc., which advantagely replace analogous manufactured asbestos cement products.

In this respect, asbestos has the serious drawback of possessing toxicity characteristics, because of which it constitutes a danger to the health both of those workers who extract the material, and of users who are required to cut or saw manufactured cement products containing asbestos fibres.

To obviate this drawback, manufactured cement products have been proposed in which the asbestos fibres are replaced by fibres obtained from fibrillated plastics film. However, the methods proposed up to the present time have the drawback of resulting in products which are either too costly or of unsatisfactory quality.

For example, in British Patent No. 1,130,612 it is proposed to incorporate into the cement up to 2% of fibres having a length not exceeding 7.5 cm produced by stretching and fibrillating plastics film, particularly polypropylene, but the thin slabs obtained from mixtures containing such fibres are unsatisfactory for most applications.

Processes for producing reinforced articles of cement are also described in EP-A-0003245, GB-A-1429167, FR-A-2157617, CH-A-142089 and WO81/00375. In particular in EP-A-0003245 is described a process in which in a first step continuous lengths of networks from fibrillated organic films are formed and in a second step a plurality of said networks is made to advance into contact with a water-hardening material so as to form a composite layer.

WO81/00375 describes a method and apparatus for the production of a composite sheet material made from material including glass fibre reinforced cement in which the curable material is deposited in layers and in which at least the final layer is consolidated by a local surface treatment with a vibratory screeder.

Said descriptions offer no teaching on the method of distributing the water-hardening material in the networks.

Italian patent application No. 9504A/77 describes the preparation of manufactured cement products reinforced by means of a mesh constituted by a fibrillated plastics film. However, this description offers no teaching regarding the method for obtaining the manufactured product, of which only a few samples are produced on a laboratory scale by methods which resemble manual methods and are in all cases discontinuous, so that the problem of transferring this principle to industrial production remains completely open.

In this respect, in incorporating one or more mesh structures constituted by fibrillated plastics film into the cement it is difficult to obtain homogeneous distribution of the cement in the mesh, with the result that air bubbles form and portions of the reinforcing structures remain unimpregnated, especially where the manufacturing process is carried out at a speed which is of industrial interest.

One attempt to solve this problem is described in Italian patent application No. 23761A/79 which claims a method and device for continuously manufacturing cement-based products with incorporated synthetic polymer mesh structures as reinforcement. The method consists of the following operations: continuously depositing a layer of cement mix on a horizontally moving band, continuously depositing the mesh structure on said layer, depositing a layer of cement mix on said mesh structure, compacting by vibration and finally compressing the assembly.

This method has given rise to considerable drawbacks in its practical implementation.

Firstly, the complexity of the operations and apparatus are such that problems arise in the form of interruptions and the need for frequent maintenance, which make the method too costly and the finished product commercially uncompetitive. Furthermore, the manufactured product obtained by the described method and device does not possess uniform mechanical characteristics, in that for example as a result of stressing by the application devices the mesh deforms so that it becomes thicker in certain zones and thinner in other zones. Again, the system provided for distributing the cement mix does not enable uniform penetration into the mesh interior to be obtained. For these reasons, the manufactured product obtained does not have the quality and price characteristics required by the market, so that said method has found no industrial application.

All these drawbacks of the known art are obviated by the use of the method and apparatus according to the present invention.

The present invention refers to a method for producing manufactured cement products reinforced by means of mesh obtained from plastics film wherein the mesh is incorporated into the cement by spraying a cement mix under pressure onto said mesh, the mesh being made to advance with a continuous horizontal movement, rigid with a cloth or felt support, the spraying of the cement mix being performed by means of a spray gun which moves in a plane parallel to and higher than the plane in which the mesh advances, characterised in that said movement has a component in the same direction as that in which the mesh advances and having the same speed as the mesh itself and a component perpendicular to the direction in which the mesh advances.

The present invention refers also to an apparatus for spraying a cement mix over a mesh advancing horizontally for producing manufactured cement products reinforced by means of mesh obtained from plastics film, comprising a spray gun (44) slidably mounted on a guide (33) and with a to-and-fro movement transversely to the direction of advancement of the mesh, characterised in that the spray gun (44) is mounted on a carriage (39) slidably in the direction of advancement of the mesh and driven by said carriage (39) driven by a chain (41) with a to-and-fro movement transversely to the direction of advancement of the mesh, in that the guide (33) is rotatable about a vertical axis between two end positions, in that the guide is driven by a piston (36) which can move the guide (33) from one end position to the other one and back again so that the guide (33) enables to spray gun (44) to undergo a movement with a component parallel to the direction of advancement of the mesh.

By operating with the method and the apparatus according to the present invention a product is obtained with uniform mechanical characteristics in that uniform distribution of the cement mix is ensured. The cement mix penetrates into the mesh without leaving empty spaces, and the mesh is uniformly distributed even if it consists of several layers. Moreover, highly concentrated cement mixes close to their final density can be used, and this characteristic together with the possibility of using several layers of superposed mesh for each impregnation station leads to the advantage of being able to operate with a reduced number of spraying stations.

Finally, there is the advantage that the apparatus is simple and requires only modest maintenance.

These and further advantages and characteristics of the method and apparatus according to the present invention will be apparent from the description and figures given hereinafter which relate to preferred methods of implementing the present invention, and are given by way of non-limiting example.

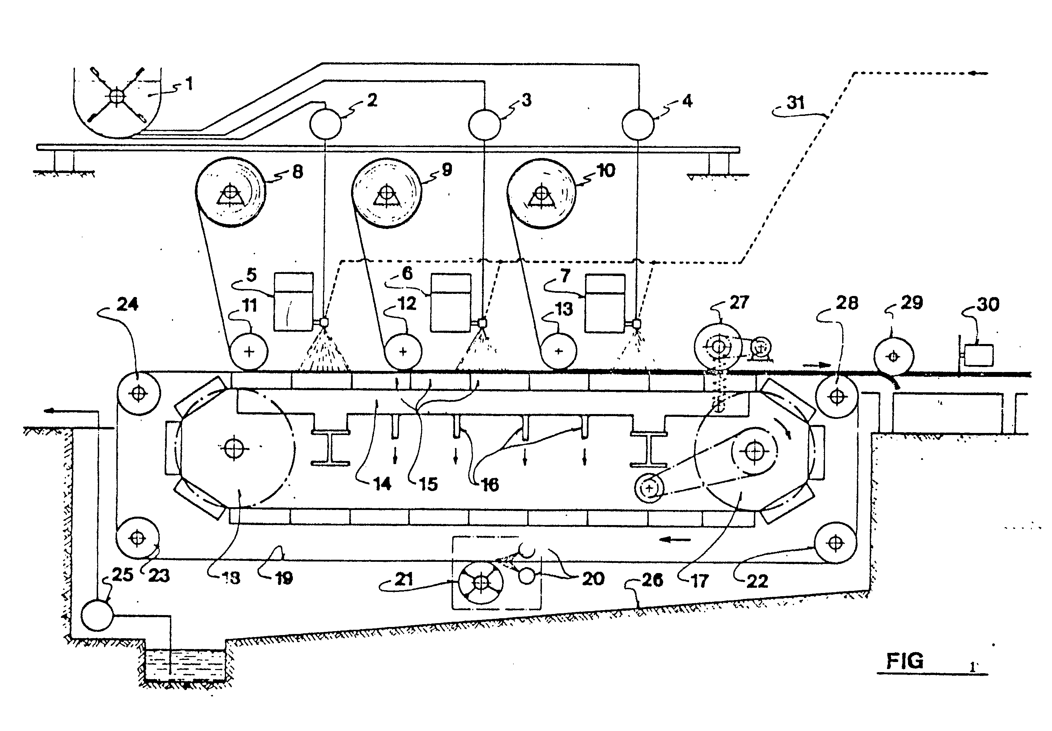

Figure 1 is a side view of a type of apparatus for the continuous production of cement slabs reinforced by means of mesh obtained from plastics film, in particular fibrillated, using the method according to the present invention.

The apparatus is mounted on a frame 14 formed from two parallel longitudinal members on which there slide a series of elements 15, the upper surface of which, shaped in accordance with the profile of the slabs to be obtained (flat or corrugated), comprises a series of holes of about 3 mm diameter spaced apart by about 20 mm, to allow passage of the excess water contained in the slab under formation. The water is removed through the tubes 16 connected to the longitudinal members of the frame 14 which in their turn communicate with the elements 15. A suction system with vacuum pumps (not shown) is connected to the tubes 16. The tubes 16 are connected to separated zones of the longitudinal members so as to be able to obtain zones of different degrees of vacuum at the slab under formation.

The elements 15 are moved by two chains which are driven by the wheels 17 and are deviated about the wheels 18.

A cloth or felt band 19 acting as a filter rests on the elements 15 and advances rigidly with them in its upper part where the slab formation takes place. In its lower part, the cloth or felt band is deviated over rollers 22, 23, 24 and 28, and is washed by one or more sprayers 20, the operation of which can be aided by a beater 21. The cloth or felt band is also provided with guide and tensioning devices.

The pump 25 removes the water which collects on the base of the tank 26.

The feed systems for the cement mix and mesh are shown diagrammatically in the upper part of Figure 1.

The cement mix is contained in a tank 1 containing a stirrer.

Said cement mix is constituted mainly by a mixture of cement and water in which the water can vary from 30% to 60% and preferably from 35% to 45% by weight with respect to the cement. Said cement mix can also contain inert fillers such as sand, pigments, fibrous materials, pumice and fly ash to the extent of between 10% and 60% and preferably between 25% and 40% by weight, and additives such as flocculating, dispersing, accelerating and other agents.

The cement mix is withdrawn from the tank 1 by the positive-displacement pumps 2, 3 and 4, which feed the spray units 5, 6 and 7 at constant throughput. Compressed air is fed through the line 31 to the guns which spray the cement mix on to the mesh.

The mesh, packaged into reels, is fed by the feeders 8, 9 and 10, which also keep said mesh under slight tension. the mesh is fed at a speed of between 0.5 and 18 m/minute and preferably between 4 and 10 m/minute.

As stated, said mesh is constituted preferably by a fibrillated plastics film which can be of polyolefin, polyamide or other type. However, the mesh is preferably obtained from fibrillated polypropylene film.

The mesh is guided on the cloth or felt by means of the devices 11, 12 and 13, which are in the form of smooth idle rollers. If the apparatus is equipped for producing slabs of corrugated profile, the devices 11, 12 and 13 would be constituted by a series of profiled rollers which accompany the mesh over the profiled contour of the elements 15.

After the mesh fed by the feeder 8 has passed beyond the roller 11, it is impregnated with the cement mix sprayed by the device 5. The mix completely penetrates between the mesh apertures in order to give complete impregnation by virtue of the spray pressure and its degree of atomisation.

Figure 1 shows three mesh impregnation stations corresponding to the spray units 5, 6 and 7 respectively. However, the number of these stations can vary from one to more than three according to the thickness of the mesh used the type of structure, the number of component elementary layers and the thickness of the slab to be obtained.

The proportion by weight of mesh to cement is kept between 1% and 6% and preferably between 3% and 5%.

When using meshes consisting of several elementary layers or which are particularly difficult to impregnate, it is possible to adjust the distance of the roller 11 from the cloth or felt so as to keep the mesh slightly raised from the cloth or felt during impregnation. The degree of impregnation can be influenced in this manner.

Downstream of the impregnation stage it is possible to install a smoothing device for example in the form of steel scraper blades, smoothing rollers or other means which exert a slight pressure on the sprayed mix to remove slight irregularities in the surface layer.

Analogous operations are repeated on the meshes fed by the feeders 9 and 10, to attain the final slab thickness.

In order to make the layer of mix more uniform and to increase the rate of advancement of the slab under formation, several guns can be mounted on each spray unit.

The suction system enables excess water to be extracted from the slab. The degree of vacuum can be independently adjusted in each suction zone. Preferably, the degree of applied vacuum increases in the direction of advancement of the manufactured product.

The purpose of the compression device 27 is to compact the slab, so reducing its porosity, and to smooth its surface in order to improve its appearance.

The slab leaves the cloth or felt at the deviation wheel 28, is then trimmed longitudinally and transversely by the devices 29 and 30, and is fed to the curing cycle as in the case of fibre-cement slabs.

The support function of the elements 15 can also be performed by a continuous felt band driven and deviated by rollers, and dried by suction boxes. Again, if pipes are to be produced instead of slabs, it is necessary only to install downstream of the impregnation system a mandrel about which the impregnated mesh is wrapped for pipe formation.

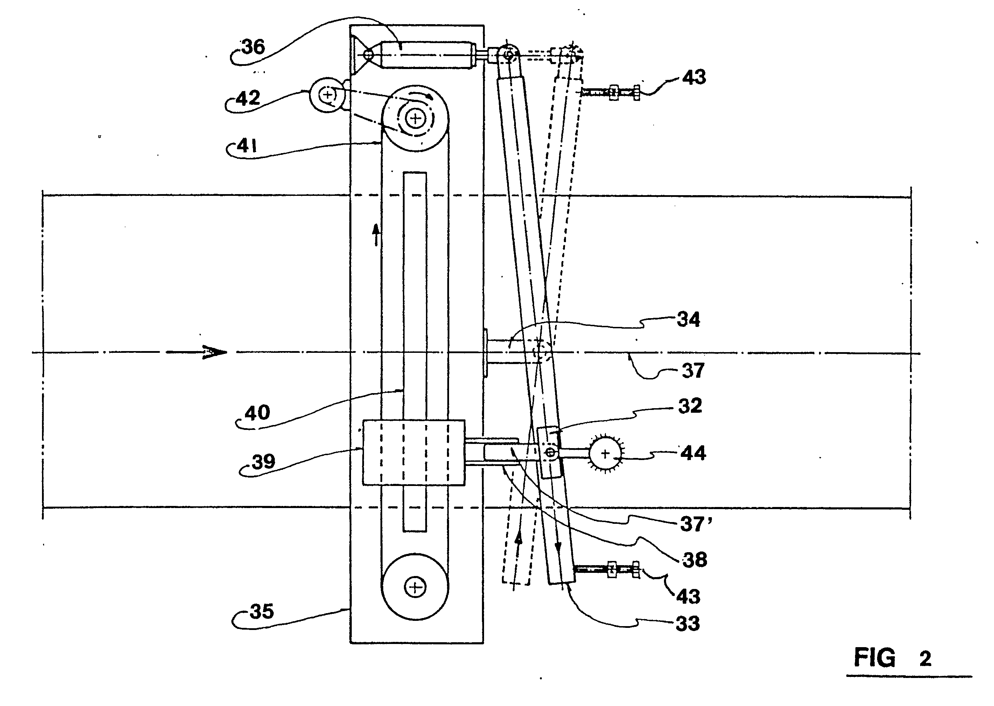

Figure 2 shows a plan view of a preferred embodiment of the device for uniformly distributing the cement mix over the mesh.

The spray gun 44 is fed at constant throughput by a positive-displacement pump (not shown) and is connected with the slide block 32 which can slide along the guide 33 with a to-and-fro movement as indicated by the arrows.

The guide 33 is hinged to the support 34, which is rigid with the frame 35.

The piston 36 can move the guide 33 into two positions (the position shown on the drawing by full lines and the position shown on the drawing by dashed lines respectively) which are symmetrical about the axis of the slab under formation, which advances in an underlying horizontal plane.

The rod 37' is hinged to the slide blocks 32 and can slide in the tube 38 rigid with the carriage 39.

The carriage 39 runs on the guide 40 driven by the chain 41, which is driven by the geared motor 42. The carriage 39 is connected to one branch of the chain 41 for its outward path of travel and to the other branch of the chain 41 for its return path of travel respectively. The device for engaging and releasing the carriage 39 with and from the two branches of the chain is not shown. The spray gun 44 thus moves transversely to the slab under formation with a to-and-fro movement while the slab advances horizontally in an underlying plane parallel to that in which the gun moves.

The inclined guide 33 enables the gun to undergo a movement, of which the component parallel to the axis of advancement of the slab is of the same velocity as the slab itself.

The piston 36 moves the guide 33 simultaneously with the reversal of movement of the carriage 39.

The result of the described movements is that the pattern of the sprayed material is in the form of several parallel bands perpendicular to the axis of advancement of the slab, to provide very regular impregnation of the mesh.

By variously setting the adjustment screws 43, the described device enables the paths of the jets delivered by the guns to be orientated at angles of other than 90° to the axis of advancement of the slab.

Furthermore, if several impregnation stations are used, the device of Figure 2 enables the movement of the various guns to be easily synchronised.

A non-limiting example is given hereinafter of the method and operation of the apparatus according to the present invention.

EXAMPLE

A continuous production run was carried out of cement slabs reinforced with mesh obtained from fibrillated polypropylene film, using the apparatus shown in Figure 1 provided with four impregnation stations comprising the device shown in Figure 2.

The cement mix had the following composition:
- Cement 60% by weight of total
- Water 24% by weight of total
- Sand 16% by weight of total

Each of the four meshes consisted of 12 layers of polipropylene film, of which 8 had their fibres orientated longitudinally and four had their fibres orientated transversely.

Each mesh had a lenght of 65 cm and a weight of 60 g/m².

Each of the four meshes was fed at a rate of 4.5 m/minute, and the cement mix was fed at a throughput of 12 Kg/minute for each impregnation station.

The excess water was removed from the slab under formation by suction which in the final portion reached a vacuum level of 400 mm Hg.

The slab was compressed by a free steel roller of diameter 300 mm pressing on the slab with a force of about 3 Kg/cm.

The slabs were trimmed to a length of 200 cm and width of 60 cm, and were then cured in a moist environment at ambient temperature. Their thickness was 6.5 mm. The finished slabs had a propylene material content of 2.9% of the cement by weight.

On the aforesaid basis, this polypropylene was distributed in the following manner: 1.93% in the longitudinal direction and 0.97% in the transverse direction.

10 test pieces were cut from the finished slabs for testing breakage under longitudinal bending conditions, together with 10 test pieces for testing breakage under transverse bending conditions. Said test pieces had the following dimension: lenght 175 mm, width 70 mm, thickness 6.5 mm.

The test pieces were tested by means of a Dillon Inc. tester (Van Nuys - California) Model M Serial No. 868, the scale being calibrated 0-300 lbs, the test pieces being placed on two supports spaced apart by 150 mm and than loaded at their centre. The following results were obtained:
- breaking stress under longitudinal bending conditions:
  mean breaking stress = 306 Kg/cm²;
  standard deviation 16,86;
- breaking stress under transverse bending conditions:
  mean breaking stress = 170 Kg/cm²;
  standard deviation 4.5.

Claims

1. A method for producing manufactured cement products reinforced by means of mesh obtained from plastics film wherein the mesh is incorporated into the cement by spraying a cement mix under pressure onto said mesh, the mesh being made to advance with a continuous horizontal movement, rigid with a cloth or felt support, the spraying of the cement mix being performed by means of a spray gun which moves in a plane parallel to and higher than the plane in which the mesh advances, characterised in that said movement has a component in the same direction as that in which the mesh advances and having the same speed as the mesh itself and a component perpendicular to the direction in which the mesh advances.

2. A method as claimed in claim 1, characterised in that the cement mix has a composition within the following values:
   cement 100 parts by weight
   water 30-60 parts by weight
   inert material 10-60 parts by weight.

3. Method as claimed in claim 1, characterised in that the mesh is made to advance at a speed of between 0.5 and 18 m/minute, the proportion by weight of mesh to cement being kept between 1% and 6%.

4. An apparatus for spraying a cement mix over a mesh advancing horizontally for producing manufactured cement products reinforced by means of mesh obtained from plastics film, comprising a spray gun (44) slidably mounted on a guide (33) and with a to-and-fro movement transversely to the direction of advancement of the mesh, characterised in that the spray gun (44) is mounted on a carriage (39) slidably in the direction of advancement of the mesh and driven by said carriage (39) driven by a chain (41) with a to-and-fro movement transversely to the direction of advancement of the mesh, in that the guide (33) is rotatable about a vertical axis between two end positions, in that the guide is driven by a piston (36) which can move the guide (33) from one end position to the other one and back again so that the guide (33) enables the spray gun (44) to undergo a movement with a component parallel to the direction of advancement of the mesh.

5. An apparatus as claimed in claim 4, characterised in that the carriage 39 is connected to one branch of the chain 41 for its outward path of travel and to the other branch of the chain 41 for its return path of travel respectively, the piston 36 moving the guide 33 simultaneously with the reversal of movement of the carriage 39.

## Revendications

1. Procédé d'obtention de produits à base de ciment manufacturé renforcé au moyen d'un treillis obtenu à partir d'un film en plastique, dans lequel le treillis est incorporé au ciment par pulvérisation d'un mélange à base de ciment sous pression sur ledit treillis ; le treillis étant mis en déplacement suivant un mouvement horizontal continu, et rendu rigide à l'aide d'un support en textile ou en feutre, la pulvérisation du mélange à base de ciment étant effectuée au moyen d'un pistolet à enduire qui se déplace dans un plan parallèle et au-dessus du plan dans lequel avance le treillis, caractérisé en ce que ledit mouvement présente une composante dans la même direction que celle dans laquelle avance le treillis et ayant la même vitesse que le treillis lui-même, et une composante perpendiculaire à la direction dans laquelle avance le treillis.

2. Procédé tel que revendiqué dans la revendication 1, caractérisé par le fait que le mélange à base de ciment a une composition comprise à l'intérieur des valeurs suivantes :
100 parties en poids de ciment
30 à 60 parties en poids d'eau
10 à 60 parties en poids de matériau inerte.

3. Procédé tel que revendiqué dans la revendication 1, caractérisé par le fait que le treillis est mis en déplacement à une vitesse comprise entre 0,5 et 18 m/minute, la proportion pondérale du treillis au ciment étant maintenue entre 1 % et 6 %.

4. Appareil pour la pulvérisation d'un mélange à base de ciment au-dessus d'un treillis se déplaçant horizontalement en vue d'obtenir des produits à base de ciment manufacturé renforcé au moyen d'un treillis obtenu à partir d'un film en plastique, comprenant un pistolet à enduire (44) monté coulissant sur une glissière (33) et soumis à un mouvement alternatif transversal par rapport à la direction de déplacement du treillis, caractérisé par le fait que le pistolet à enduire (44) est monté sur un chariot (39) coulissant dans la direction de déplacement du treillis et est entraîné par ledit chariot (39) actionné par une chaîne (41) suivant un mouvement alternatif transversalement à la direction de déplacement du treillis, par le fait que la glissière (33) est susceptible de rotation autour d'un axe vertical entre deux positions extrêmes, et par le fait que la glissière est actionnée par un piston (36) qui peut déplacer la glissière (33) d'une position extrême vers l'autre et en sens inverse à nouveau, de telle sorte que la glissière (33) permette au pistolet à enduire (44) d'effectuer un mouvement avec une composante parallèle à la direction de déplacement du treillis.

5. Appareil tel que revendiqué dans la revendication 4, caractérisé par le fait que le chariot (39) est relié à l'une des branches de la chaîne (41) pour son trajet de déplacement aller et à l'autre branche de la chaîne (41) pour son trajet de déplacement en retour respectivement, le piston (36) déplaçant la glissière (33) en même temps que l'inversion du mouvement du chariot (39).

## Ansprüche

1. Verfahren zur Herstellung von fabriksmäßig erzeugten Zementprodukten, welche mit einem aus einem Kunststoffilm erhaltenen Maschenmaterial bewehrt sind, wobei das Maschenmaterial in den Zement durch unter Druck erfolgendes Aufspritzen einer Zementmischung auf das Maschenmaterial eingefügt wird und das auf einem Tuch- oder Filzträger unbewegliche Maschenmaterial kontinuierlich horizontal vorwärts bewegt wird und das Aufspritzen der Zementmischung mittels einer Spritzpistole ausgeführt wird, welche sich in einer Ebene bewegt, welche sich parallel zur Ebene, in der das Maschenmaterial wandert, erstreckt und höher als letztere Ebene liegt, dadurch gekennzeichnet, daß diese Bewegung eine in der gleichen Richtung wie jene, in der das Maschenmaterial vorwärts wandert, verlaufende Komponente mit der gleichen Geschwindigkeit wie das Maschenmaterial und eine senkrecht zur Richtung, in der das Maschenmaterial vorwärts wandert, verlaufende Komponente hat.

2. Verfahren nach Anspruch 1, dadurch gekennzeichnet, daß die Zementmischung eine in den nachfolgenden Bereichen liegende Zusammensetzung hat:
Zement 100 Gewichtsteile
Wasser 30-60 Gewichtsteile
Inertmaterial 10-60 Gewichtsteile.

3. Verfahren nach Anspruch 1, dadurch gekennzeichnet, daß das Maschenmaterial mit einer zwischen 0,5 und 18 m/min liegenden Geschwindigkeit vorwärts bewegt wird, und daß das Gewichtsverhältnis Maschenmaterial zu Zement zwischen 1% und 6% gehalten wird.

4. Vorrichtung zum Aufspritzen einer Zementmischung auf ein sich horizontal vorwärts bewegendes Maschenmaterial zur Herstellung von fabriksmäßig erzeugten Zementprodukten, welche mit einem aus einem Kunststoffilm erhaltenen Maschenmaterial bewehrt sind, welche Vorrichtung eine Spritzpistole (44) aufweist, welche auf einer Führung (33) verschiebbar angebracht und quer zur Richtung der Vorwärtsbewegung des Maschenmaterials hin- und herbewegbar ist, dadurch gekennzeichnet, daß die Spritzpistole (44) auf einem Schlitten (39) in Richtung der Vorwärtsbewegung des Maschenmaterials verschiebbar angebracht ist und durch diesen Schlitten (39) angetrieben wird, der durch eine Kette (41) in hin- und hergehender Bewegung quer zur Richtung der Vorwärtsbewegung des Maschenmaterials angetrieben wird, daß die Führung (33) um eine Vertikalachse zwischen zwei Endstellungen drehbar ist, daß die Führung durch einen Kolben (36) angetrieben wird, der die Führung (33) von einer Endstellung in die andere und wieder zurück bewegen kann, so daß die Führung (33) der Spritzpistole (44) die Ausführung einer Bewegung mit einer zur Richtung der Vorwärtsbewegung des Maschenmaterials parallelen Komponente ermöglicht.

5. Vorrichtung nach Anspruch 4, dadurch gekennzeichnet, daß der Schlitten (39) für seine Auswärtsbewegung mit einem Abschnitt der Kette (41) und für seine Rückbewegung mit dem anderen Abschnitt der Kette (41) verbunden wird, und daß der Kolben (36) die Führung (33) simultan mit der Bewegungsumkehr des Schlittens (39) bewegt.

FIG 1

EP 0 152 016 B1

FIG 2

EP 0 152 016 B1